# EUROPÄISCHE PATENTSCHRIFT

(11) **EP 4 349 687 B1**
(45) Veröffentlichungstag und Bekanntmachung des Hinweises auf die Patenterteilung: **04.02.2026**
(21) Anmeldenummer: 23202517.1
(22) Anmeldetag: 09.10.2023
(51) Int. Cl.: B62B 3/02, B62B 3/14, B62B 5/02

(54) **EINKAUFSWAGEN**
SHOPPING TROLLEY
CHARIOT D'ACHAT

(30) Priorität: 07.10.2022 CH 11872022
(43) Veröffentlichungstag der Anmeldung: 10.04.2024
(73) Patentinhaber: Ingold, Helen, 8038 Zürich (CH); Ingold, Helen, Pamela, 8810 Horgen (CH); Ingold, Nicole, 8134 Adliswil (CH)
(72) Erfinder: Ingold, Helen, 8038 Zürich (CH); Ingold, Helen, Pamela, 8810 Horgen (CH); Ingold, Nicole, 8134 Adliswil (CH)
(74) Vertreter: Gachnang AG Patentanwälte

(56) Entgegenhaltungen:
- CH-A5- 568 051
- FR-A1- 2 907 749
- GB-A- 995 855
- US-A- 3 115 975
- US-A- 4 373 611

## Beschreibung

Die Erfindung betrifft einen Einkaufswagen zum handgeführten Rollen bzw. Fahren auf einer Fahrfläche und Aufnehmen und Transportieren von Transportgut.

Solche Einkaufswagen sind typischerweise zum Transport von Lebensmitteln, Kleidern, Haustieren, Postsendungen, Papierakten usw. nutzbar.

Typische Einkaufswagen umfassen einen Korb zur Aufnahme des Transportguts. Der Korb umfasst einen im Wesentlichen rechteckigen Boden und damit verbunden vier im Wesentlichen rechteckige Seitenwände. Des Weiteren umfasst der Korb eine Aufnahmeöffnung, durch welche das zu transportierende Gut auf dem Boden des Korbs angeordnet werden kann. Der Boden und die Seitenwände bestimmen einen Aufnahmeraum, welcher zu transportierendes Gut aufnehmen kann.

Der Boden und die Seitenwände können als Gitter ausgeführt sein, sodass ein zu transportierendes Gut von ausserhalb des Korbs sichtbar ist.

Ein solcher Einkaufswagen umfasst auch Rollen, welche den Korb beabstandet zu einer Fahrfläche halten, sodass der Korb auf der Fahrfläche rollbar und der Einkaufswagen auf der Fahrfläche handgeführt fahrbar ist.

Typischerweise umfasst ein solcher Einkaufswagen ebenfalls einen Griff zum handgeführten Rollen bzw. Fahren des Einkaufswagens.

Ein solcher Einkaufswagen ist beispielhaft in den Schriften WO2020150406, US2006214383 und US8733786 offenbart Einkaufswägen mit einer schwenkbaren Wand sind in der GB 995855 A, in der CH 568 051 A5 und in der US 4,373,611 A offenbart.

Es ist eine Aufgabe der Erfindung einen Einkaufswagen bereitzustellen mit guten Gebrauchseigenschaften, der ein Transportieren von unterschiedlichem Transportgut einfach und sicher ermöglicht.

Die Aufgabe wird gelöst durch einen Einkaufswagen gemäss den Merkmalen des Anspruchs 1. Die abhängigen Ansprüche betreffen bevorzugte Ausführungsformen des Einkaufswagens.

Die Erfindung betrifft einen Einkaufswagen zum handgeführten Rollen auf einer Fahrfläche und Aufnehmen und Transportieren von Transportgut. Der Einkaufswagen umfasst einen Gitterkorb mit einem Hauptrahmen, einem Boden, vier Seitenwänden und einer Aufnahmeöffnung, wobei der Boden und die vier Seitenwände durch den Hauptrahmen zum Gitterkorb verbunden sind, sodass die Aufnahmeöffnung dem Boden gegenüberliegt und Transportgut durch die Aufnahmeöffnung vom Gitterkorb aufnehmbar ist. Des Weiteren umfasst der Einkaufswagen Rollen, die am Hauptrahmen befestigt sind, sodass der Einkaufswagen mit dem Boden beabstandet zur Fahrfläche auf der Fahrfläche handgeführt rollbar ist. Dabei ist eine der vier Seitenwände schwenkbar an einem parallel zum Boden verlaufenden Hauptrahmenabschnitt befestigt, sodass die eine der vier Seitenwände von der Fahrfläche und dem Gitterkorb weg um den parallel zum Boden verlaufenden Hauptrahmenabschnitt über die Aufnahmeöffnung schwenkbar ist, und durch Schwenken der einen der vier Seitenwände von der Fahrfläche und dem Gitterkorb weg um den parallel zum Boden verlaufenden Hauptrahmenabschnitt, eine seitliche Aufnahmeöffnung am Gitterkorb freigegeben wird, durch die Transportgut vom Gitterkorb aufnehmbar ist.

Die eine der vier Seitenwände kann so über die Aufnahmeöffnung schwenkbar sein, dass zumindest ein Teil der Aufnahmeöffnung von der einen der vier Seitenwände überragt wird. Insbesondere ist die eine der vier Seitenwände so über die Aufnahmeöffnung schwenkbar, dass die Aufnahmeöffnung von der einen der vier Seitenwände überdeckbar ist.

Der Hauptrahmen kann mehrere Rahmenteile umfassen. Die mehreren Rahmenteile können Rohrprofile sein. Die Rohrprofile können gebogene Rohrprofile sein.

Die Rahmenteile können über Schraub und/oder Nietverbindungen miteinander verbunden sein.

Die Aufnahmeöffnung kann durch die dem Boden gegenüberliegenden jeweiligen Ränder der vier Seitenwände begrenzt sein.

Die eine der vier Seitenwände kann um mindestens 180°, bevorzugt um 270°, um den parallel zum Boden verlaufenden Hauptrahmenabschnitt schwenkbar sein.

Die seitliche Aufnahmeöffnung liegt quer zur Aufnahmeöffnung des Gitterkorbs.

In einem ersten erfinderischen Schritt wurde erkannt, dass die Gebrauchseigenschaften der Einkaufswagen des Standes der Technik verbesserbar sind.

In einem weiteren erfinderischen Schritt wurde erkannt, dass die Art wie Transportgut von einem Einkaufswagen aufnehmbar ist die Gebrauchseigenschaften von Einkaufswagen wesentlich mitbestimmt.

In einem weiteren erfinderischen Schritt wurde erkannt, dass die Art wie Transportgut von einem Einkaufswagen aufnehmbar ist dadurch verbessert werden kann, dass das Transportgut nicht über die Höhe der Seitenwände des Gitterkorbs angehoben werden muss, um vom Gitterkorb aufgenommen zu werden.

In einem weiteren erfinderischen Schritt wurde erkannt, dass durch die Bereitstellung eines Gitterkorbs mit einer um einen parallel zum Boden verlaufenden Hauptrahmenabschnitt schwenkbaren Seitenwand, das Transportgut auf Höhe des Bodens und nicht die Höhe der Seitenwände angehoben werden muss, um vom Gitterkorb aufgenommen zu werden. Des Weiteren wurde erkannt, dass eine Schwenkbarkeit der Seitenwand vom Boden und dem Gitterkorb weg über die Aufnahmeöffnung
ein Schwenken der Seitenwand in eine Stellung ermöglicht, die eine seitliche Aufnahmeöffnung freigibt und in der die geschwenkte Seitenwand seitlich vom Wagen nicht vorsteht, und
zum Schwenken nur Raum vor der Seite des Einkaufswagens, welche die schwenkbare Seitenwand umfasst benötigt.

Gemäss einer Ausführungsform des Einkaufswagens weist die eine der vier Seitenwände ein sich quer zum parallel zum Boden verlaufenden Hauptrahmenabschnitt erstreckendes Gitterelement auf, das an einem Ende eine Schlaufe als Befestigungselement bildet, und erstreckt sich der parallel zum Boden verlaufende Hauptrahmenabschnitt durch die Schlaufe hindurch.

Die Schlaufe kann durch Biegen des Endes des Gitterelements gebildet sein.

Die Schlaufe kann geschlossen sein.

Dadurch, dass sich der parallel zum Boden verlaufende Hauptrahmenabschnitt durch die Schlaufe hindurch erstreckt ist die eine der vier Seitenwände um diesen Hauptrahmenabschnitt schwenkbar an diesem befestigt und kann unverlierbar mit dem Hauptrahmen verbunden sein.

Gemäss einer Ausführungsform des Einkaufswagens ist die Schlaufe eine ovale Schlaufe, sodass die eine der vier Seitenwände auf den parallel zum Boden verlaufenden Hauptrahmenabschnitt zu und von diesem wegbewegbar ist.

Dadurch ist die eine der vier Seitenwände in jeder Schwenkposition relativ zum parallel zum Boden verlaufenden Hauptrahmenabschnitt verschiebbar. Dadurch kann die eine der vier Seitenwände in einer bestimmten Schwenkposition durch Verschieben in eine Arretier-Position bringbar sein.

Gemäss einer Ausführungsform des Einkaufswagens ist das Gitterelement ein sich im Wesentlichen gerade erstreckender Gitterstab mit der an einem Ende gebildeten Schlaufe als Befestigungselement, weist die eine der vier Seitenwände einen U-förmigen Schwenkrahmen mit einem Durchgangsloch auf, wobei das Durchgangsloch sich quer zur Verlaufsrichtung des U-förmigen Schwenkrahmens erstreckt, und erstreckt sich der Gitterstab durch das Durchgangsloch, sodass sich auf der einen Seite des Durchgangslochs der Gitterstab im Wesentlichen gerade vom U-förmigen Schwenkrahmen weg erstreckt und auf der anderen Seite des Durchgangslochs sich die Schlaufe vom U-förmigen Schwenkrahmen weg erstreckt.

Dadurch ist die eine der vier Seitenwände durch den U-förmigen Schwenkrahmen stabilisiert.

Gemäss einer Ausführungsform des Einkaufswagens weist der Boden einen Spalt auf, und weisen die beiden Endbereiche des U-förmigen Schwenkrahmens einen, zum übrigen Querschnitt des U-förmigen Schwenkrahmens, verengten Querschnitt auf, sodass die beiden Endbereiche in den Spalt steckbar sind.

Dadurch ist die eine der vier Seitenwände in einer Schwenkposition durch Verschieben der einen der vier Seitenwände relativ zum parallel zum Boden verlaufenden Hauptrahmenabschnitt in eine Arretier-Position bringbar.

Der U-förmige Schwenkrahmen kann ein Rohrprofil sein. Ist der U-förmige Schwenkrahmen ein Rohrprofil, kann der verengte Querschnitt durch jeweiliges Verformen, beispielsweise Zusammendrücken, der Endbereiche des U-förmigen Schwenkrahmens gebildet sein.

Gemäss einer Ausführungsform des Einkaufswagens sind die vier Seitenwände zwei Seitenwände, eine Vorderwand und eine Rückwand, verlaufen die zwei Seitenwände parallel zueinander und zueinander beabstandet, verlaufen die Vorderwand und die Rückwand parallel zueinander, zueinander beabstandet und jeweils quer zu den zwei Seitenwänden, verlaufen die Seitenwände, die Vorderwand und die Rückwand jeweils quer zum Boden, umfasst der Hauptrahmen ein erstes U-förmiges Rahmenteil und ein zweites U-förmiges Rahmenteil, umfasst die Vorderwand das erste U-förmige Rahmenteil, umfasst die Rückwand das zweite U-förmige Rahmenteil, sind das erste und das zweite U-förmige Rahmenteil jeweils mit der Öffnung zum Boden hin ausgerichtet, sind das erste und das zweite U-förmige Rahmenteil durch die zwei Seitenwände und den Boden miteinander verbunden, und ist der parallel zum Boden verlaufende Hauptrahmenabschnitt ein Abschnitt des ersten U-förmigen Rahmenteils.

Dies ermöglicht eine einfache Herstellung des Hauptrahmens und somit des Gitterkorbs des Einkaufswagens.

Der Einkaufswagen ist typischerweise dazu bestimmt, in einer bestimmten Hauptausrichtung zur Rollrichtung bzw. Fahrtrichtung gerollt bzw. gefahren zu werden. Auf diese Hauptausrichtung bezogen ist die Vorderwand diejenige der vier Seitenwände, welche quer zur Rollrichtung bzw. Fahrtrichtung ausgerichtet ist und sich in Rollrichtung bzw. Fahrtrichtung vorne am Einkaufswagen befindet. Auf diese Hauptausrichtung bezogen ist die Rückwand diejenige der vier Seitenwände, welche quer zur Rollrichtung bzw. Fahrtrichtung ausgerichtet ist und sich in Rollrichtung bzw. Fahrtrichtung hinten am Einkaufswagen befindet. Auf diese Hauptausrichtung bezogen sind die zwei Seitenwände diejenigen der vier Seitenwände, welche parallel zur Rollrichtung bzw. Fahrtrichtung ausgerichtet sind und sich in Rollrichtung bzw. Fahrtrichtung jeweils auf einer Seite des Einkaufswagens befinden.

U-förmig bedeutet, die Form des Buchstabens U aufweisend. Mit anderen Worten ausgedrückt bedeutet U-förmig, dass die Form zwei parallel zueinander verlaufende Schenkel aufweist, wobei ein Ende des einen Schenkels mit einem Ende des anderen Schenkels, welches dem einen Ende des einen Schenkels näher ist, verbunden ist und das andere Ende des einen Schenkels mit dem anderen Ende des anderen Schenkels nicht direkt verbunden ist. Die Verbindung kann gerade oder auch gekrümmt sein. D.h. die U-Form hat eine Öffnung, welche der Verbindung gegenüberliegt.

Gemäss einer Ausführungsform des Einkaufswagens bildet ein weiterer parallel zum Boden verlaufender Hauptrahmenabschnitt des zweiten U-förmigen Rahmenteils eine Auflage, ist die eine der vier Seitenwände, die von der Fahrfläche und dem Gitterkorb weg um den parallel zum Boden verlaufenden Hauptrahmenabschnitt über die Aufnahmeöffnung schwenkbar ist, die Vorderwand, und ist der Einkaufswagen so ausgestaltet, dass die Vorderwand durch Schwenken über die Aufnahmeöffnung auf die Auflage auflegbar ist.

Dadurch kann die schwenkbare Seitenwand einfach in eine Stellung geschwenkt werden, die die seitliche Aufnahmeöffnung freigibt und in der die geschwenkte Seitenwand seitlich vom Wagen nicht vorsteht.

Es ist der Einkaufswagen durch ein Verschieben des parallel zum Boden verlaufenden Hauptrahmenabschnitts in eine Verschieberichtung schräg vom Boden weg und zu einer der vier Seitenwände, welche dem parallel zum Boden verlaufenden Hauptrahmenabschnitt gegenüberliegt, hin zusammenklappbar, insbesondere ist der Einkaufswagen durch ein Verschieben der Vorderwand relativ zur Rückwand in eine Verschieberichtung schräg vom Boden weg und zur Rückwand hin zusammenklappbar.

Dadurch ist der Einkaufswagen einfach zusammenklappbar und auf engem Raum verstaubar.

Gemäss einer Ausführungsform des Einkaufswagens umfasst der parallel zum Boden verlaufende Hauptrahmenabschnitt, insbesondere und der weitere parallel zum Boden verlaufende Hauptrahmenabschnitt, mit Schaumstoff ummantelte Bereiche.

Dadurch sind Geräusche, die bei der Benutzung des Einkaufswagens entstehen dämmbar.

Gemäss einer Ausführungsform des Einkaufswagens umfassen die Rollen zwei lenkbare Rollen und zwei Dreikranzrollen, ist am Hauptrahmen eine Rollenlagerachse befestigt, und sind die zwei Dreikranzrollen an den seitlichen Enden der Rollenlagerachse gelagert.

Dadurch lässt sich der Einkaufswagen einfach und flexibel von Hand rollen bzw. fahren, bspw. auch über Hindernisse wie Treppen und Absätze usw.

Der erfindungsgemässe Einkaufswagen ist im Folgenden rein beispielhaft anhand einer konkreten in den Figuren dargestellten Ausführungsform näher beschrieben. Es zeigen:
- Figur 1: eine Ausführungsform eines erfindungsgemässen Einkaufswagens mit geschlossenem Gitterkorb;
- Figur 2: den Einkaufswagen der Figur 1 mit angehobener Vorderwand;
- Figur 3: den Einkaufswagen der Figuren 1 und 2 mit geschwenkter Vorderwand; und
- Figur 4: den Einkaufswagen der Figuren 1, 2 und 3 in zusammengeklapptem Zustand.

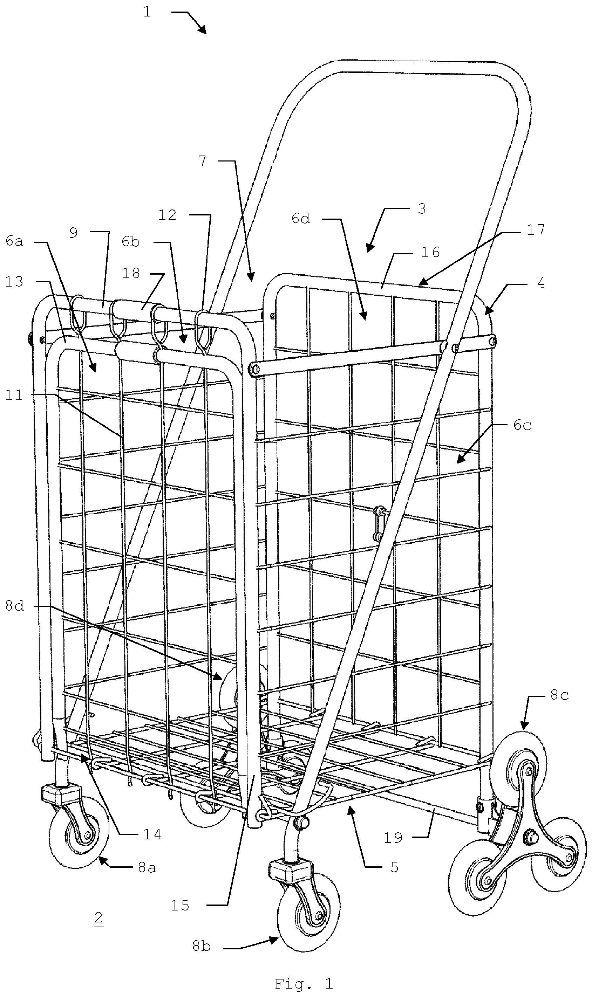

Figur 1 zeigt eine Ausführungsform eines erfindungsgemässen Einkaufwagens 1. Der Einkaufswagen 1 umfasst einen Gitterkorb 3 mit einem Hauptrahmen 4, einem Boden 5, vier Seitenwänden 6a, 6b, 6c, 6d und einer Aufnahmeöffnung 7. Der Boden 5 und die vier Seitenwände 6a, 6b, 6c, 6d sind durch den Hauptrahmen 4 zum Gitterkorb 3 verbunden. Die Aufnahmeöffnung 7 liegt dem Boden 5 gegenüber und Transportgut wie beispielsweise Lebensmittel, Kleider, Haustiere, Postsendungen, Papierakten usw. sind durch die Aufnahmeöffnung 7 auf dem Boden 5 anordenbar und so vom Gitterkorb 3 aufnehmbar ist.

Der Einkaufswagen umfasst eine Rollenlagerachse 19, zwei lenkbare Rollen 8a, 8b und zwei Dreikranzrollen 8c, 8d, die am Hauptrahmen 4 befestigt sind, sodass der Einkaufswagen 1 mit dem Boden 5 beabstandet zur Fahrfläche 2 auf der Fahrfläche 2 handgeführt rollbar ist. Die zwei Dreikranzrollen 8c, 8d sind an den seitlichen Enden der Rollenlagerachse 19 gelagert.

Die Seitenwand bzw. die Vorderwand 6a, ist schwenkbar an dem parallel zum Boden verlaufenden Hauptrahmenabschnitt 9 befestigt ist, sodass die Seitenwand bzw. die Vorderwand 6a von der Fahrfläche 2 und dem Gitterkorb weg um den parallel zum Boden 5 verlaufenden Hauptrahmenabschnitt 9 über die Aufnahmeöffnung 7 schwenkbar ist.

Durch Schwenken der Seitenwand bzw. der Vorderwand 6a, von der Fahrfläche 2 und dem Gitterkorb weg und um den parallel zum Boden verlaufenden Hauptrahmenabschnitt 9, wird eine seitliche Aufnahmeöffnung 10 am Gitterkorb 3 freigegeben, durch die Transportgut vom Gitterkorb 3 aufnehmbar ist.

Die Seitenwand bzw. die Vorderwand 6a umfasst einen sich quer zum parallel zum Boden verlaufenden Hauptrahmenabschnitt 9 erstreckenden Gitterstab, der sich im Wesentlichen gerade erstreckt mit einer an einem Ende gebildeten Schlaufe 12 als Befestigungselement. Der parallel zum Boden 5 verlaufende Hauptrahmenabschnitt 9 erstreckt sich durch die Schlaufe 12 hindurch. Die Schlaufe 12 ist eine ovale Schlaufe.

Die Seitenwand bzw. die Vorderwand 6a umfasst einen U-förmigen Schwenkrahmen 13 mit einem Durchgangsloch, wobei das Durchgangsloch sich quer zur Verlaufsrichtung des U-förmigen Schwenkrahmens 13 erstreckt.

Der Gitterstab erstreckt sich durch das Durchgangsloch, sodass sich auf der einen Seite des Durchgangslochs der Gitterstab im Wesentlichen gerade vom U-förmigen Schwenkrahmen 13 weg erstreckt und auf der anderen Seite des Durchgangslochs sich die Schlaufe 12 vom U-förmigen Schwenkrahmen 13 weg erstreckt.

Der Boden 5 umfasst einen Spalt 14, und die beiden Endbereiche des U-förmigen Schwenkrahmens 13 einen, zum übrigen Querschnitt des U-förmigen Schwenkrahmens, verengten Querschnitt 15, sodass die beiden Endbereiche in den Spalt 14 steckbar sind.

Der Einkaufswagen umfasst auch eine Rückwand 6d. Die zwei Seitenwände 6b, 6c verlaufen parallel zueinander und zueinander beabstandet. Die Vorderwand 6a und die Rückwand 6d verlaufen parallel zueinander, zueinander beabstandet und jeweils quer zu den zwei Seitenwänden 6b, 6c. Die Seitenwände 6b, 6c, die Vorderwand 6a und die Rückwand 6d verlaufen jeweils quer zum Boden 5 und der Hauptrahmen 4 umfasst ein erstes U-förmiges Rahmenteil 15 und ein zweites U-förmiges Rahmenteil 16. Die Vorderwand 6a umfasst das erste U-förmige Rahmenteil 15, die Rückwand 6d umfasst das zweite U-förmige Rahmenteil 16 und das erste und das zweite U-förmige Rahmenteil 15, 16 sind jeweils mit der Öffnung zum Boden 5 hin ausgerichtet sind. Das erste und das zweite U-förmige Rahmenteil 15, 16 sind durch die zwei Seitenwände 6b, 6c und den Boden 5 miteinander verbunden sind, und der parallel zum Boden 5 verlaufende Hauptrahmenabschnitt 9 ist ein Abschnitt des ersten U-förmigen Rahmenteils 15.

Der weitere parallel zum Boden 5 verlaufende Hauptrahmenabschnitt des zweiten U-förmigen Rahmenteils 16 bildet eine Auflage 17. Die Vorderwand 6a, die von der Fahrfläche 2 und dem Gitterkorb weg um den parallel zum Boden verlaufenden Hauptrahmenabschnitt 9 über die Aufnahmeöffnung 7 schwenkbar ist, ist durch Schwenken über die Aufnahmeöffnung 7 auf die Auflage 17 auflegbar.

Der Einkaufswagen ist ferner durch ein Verschieben des parallel zum Boden 5 verlaufenden Hauptrahmenabschnitts 9, bzw. durch ein Verschieben der Vorderwand 6a, in eine Verschieberichtung schräg vom Boden 5 weg und zur Rückwand 6d hin zusammenklappbar.

Der parallel zum Boden 5 verlaufende Hauptrahmenabschnitt 9 des Einkaufswagens 1 umfasst mit Schaumstoff ummantelte Bereiche 18.

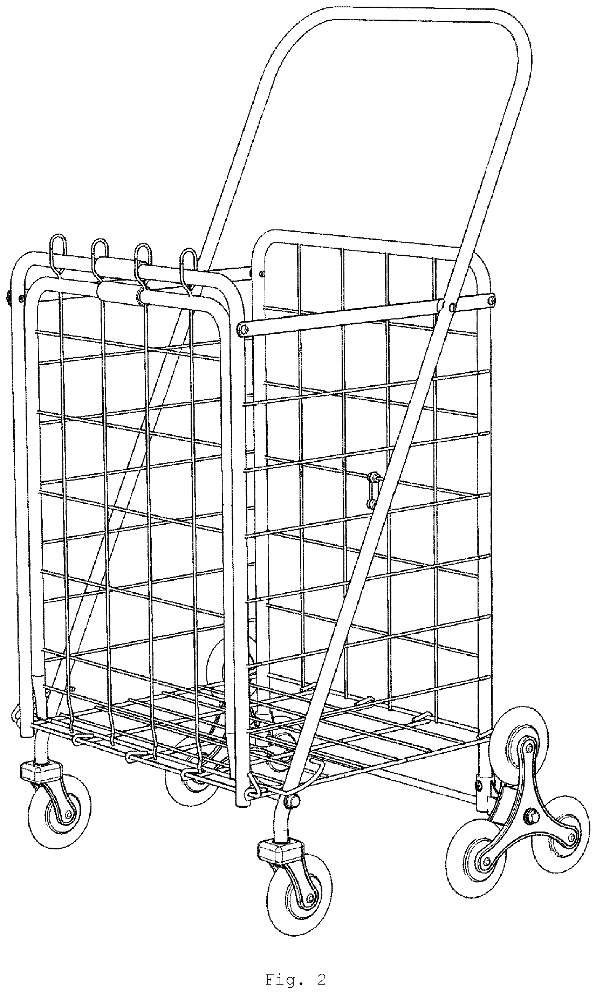

**Figur 2** zeigt den Einkaufswagen der Figur 1 mit angehobener Vorderwand 6a. Dabei ist ein Zustand des Einkaufswagens gezeigt, welcher dadurch erreicht wird, dass die Vorderwand 6a auf den parallel zum Boden verlaufenden Hauptrahmenabschnitt 9 zu bewegt wird und dadurch die beiden Endbereiche des U-förmigen Schwenkrahmens 13 aus dem Spalt gehoben werden.

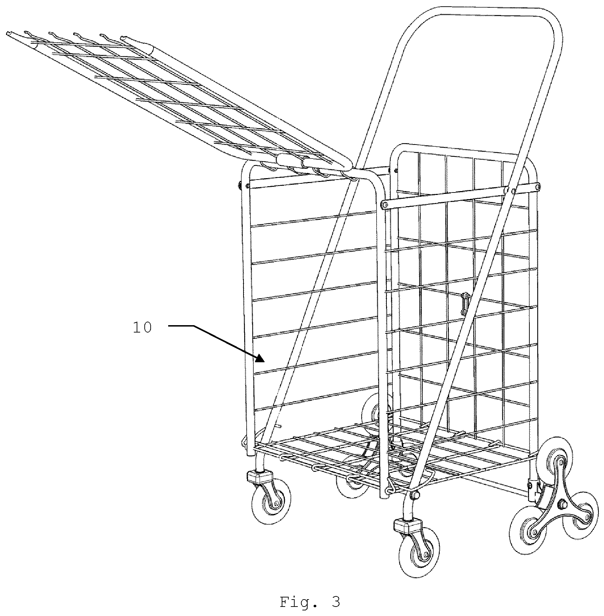

**Figur 3** zeigt den Einkaufswagen der Figuren 1 und 2 mit geschwenkter Vorderwand 6a.

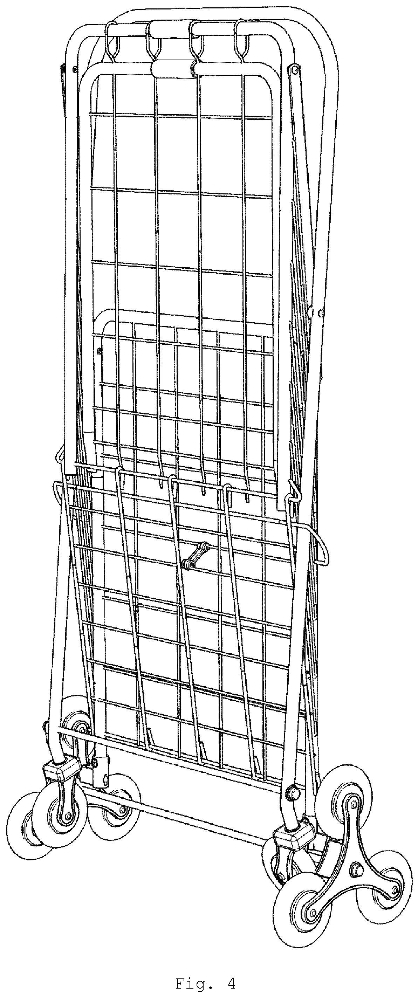

**Figur 4** zeigt den Einkaufswagen der Figuren 1, 2 und 3 in zusammengeklapptem Zustand.

## Patentansprüche

1. Einkaufswagen (1) zum handgeführten Rollen auf einer Fahrfläche (2) und Aufnehmen und Transportieren von Transportgut aufweisend
einen Gitterkorb (3) mit einem Hauptrahmen (4), einem Boden (5), vier Seitenwänden (6a, 6b, 6c, 6d) und einer Aufnahmeöffnung (7), wobei der Boden (5) und die vier Seitenwände (6a, 6b, 6c, 6d) durch den Hauptrahmen (4) zum Gitterkorb (3) verbunden sind, sodass die Aufnahmeöffnung (7) dem Boden (5) gegenüberliegt und Transportgut durch die Aufnahmeöffnung (7) vom Gitterkorb (3) aufnehmbar ist,
Rollen (8), die am Hauptrahmen (4) befestigt sind, sodass der Einkaufswagen (1) mit dem Boden (5) beabstandet zur Fahrfläche (2) auf der Fahrfläche (2) handgeführt rollbar ist, und
der Einkaufswagen (1) durch ein Verschieben eines parallel zum Boden (5) verlaufenden Hauptrahmenabschnitts (9) in eine Verschieberichtung schräg vom Boden (5) weg und zu einer der vier Seitenwände (6a, 6b, 6c, 6d), welche dem parallel zum Boden (5) verlaufenden Hauptrahmenabschnitt (9) gegenüberliegt, hin zusammenklappbar ist,
**dadurch gekennzeichnet, dass**
eine der vier Seitenwände (6a, 6b, 6c, 6d) schwenkbar am parallel zum Boden verlaufenden Hauptrahmenabschnitt (9) befestigt ist, sodass
die eine der vier Seitenwände (6a, 6b, 6c, 6d) von der Fahrfläche (2) und dem Gitterkorb weg um den parallel zum Boden (5) verlaufenden Hauptrahmenabschnitt (9) über die Aufnahmeöffnung (7) schwenkbar ist, und
durch Schwenken der einen der vier Seitenwände (6a, 6b, 6c, 6d), von der Fahrfläche (2) und dem Gitterkorb weg um den parallel zum Boden verlaufenden Hauptrahmenabschnitt (9), eine seitliche Aufnahmeöffnung (10) am Gitterkorb (3) freigegeben wird, durch die Transportgut vom Gitterkorb (3) aufnehmbar ist.

2. Einkaufswagen (1) nach Anspruch 1, wobei
die eine der vier Seitenwände (6a, 6b, 6c, 6d) ein sich quer zum parallel zum Boden verlaufenden Hauptrahmenabschnitt (9) erstreckendes Gitterelement (11) aufweist, das an einem Ende eine Schlaufe (12) als Befestigungselement bildet, und
sich der parallel zum Boden (5) verlaufende Hauptrahmenabschnitt (9) durch die Schlaufe (12) hindurch erstreckt.

3. Einkaufswagen (1) nach Anspruch 2, wobei die Schlaufe (12) eine ovale Schlaufe ist, sodass die eine der vier Seitenwände (6a, 6b, 6c, 6d) auf den parallel zum Boden verlaufenden Hauptrahmenabschnitt (9) zu und von diesem wegbewegbar ist.

4. Einkaufswagen (1) nach einem der Ansprüche 2 bis 3, wobei
das Gitterelement (11) ein sich im Wesentlichen gerade erstreckender Gitterstab ist mit der an einem Ende gebildeten Schlaufe (12) als Befestigungselement,
die eine der vier Seitenwände (6a, 6b, 6c, 6d) einen U-förmigen Schwenkrahmen (13) mit einem Durchgangsloch aufweist, wobei das Durchgangsloch sich quer zur Verlaufsrichtung des U-förmigen Schwenkrahmens (13) erstreckt, und
sich der Gitterstab durch das Durchgangsloch erstreckt, sodass sich auf der einen Seite des Durchgangslochs der Gitterstab im Wesentlichen gerade vom U-förmigen Schwenkrahmen (13) weg erstreckt und auf der anderen Seite des Durchgangslochs sich die Schlaufe (12) vom U-förmigen Schwenkrahmen (13) weg erstreckt.

5. Einkaufswagen (1) nach Anspruch 4, wobei
der Boden (5) einen Spalt (14) aufweist, und
die beiden Endbereiche des U-förmigen Schwenkrahmens (13) einen, zum übrigen Querschnitt des U-förmigen Schwenkrahmens (13), verengten Querschnitt (15) aufweisen, sodass die beiden Endbereiche in den Spalt (14) steckbar sind.

6. Einkaufswagen (1) nach einem der Ansprüche 1 bis 5, wobei
die vier Seitenwände (6a, 6b, 6c, 6d) zwei Seitenwände (6b, 6c), eine Vorderwand (6a) und eine Rückwand (6d) sind,
die zwei Seitenwände (6b, 6c) parallel zueinander und zueinander beabstandet verlaufen,
die Vorderwand (6a) und die Rückwand (6d) parallel zueinander, zueinander beabstandet und jeweils quer zu den zwei Seitenwänden (6b, 6c) verlaufen,
die Seitenwände (6b, 6c), die Vorderwand (6a) und die Rückwand (6d) jeweils quer zum Boden (5) verlaufen,
der Hauptrahmen (4) ein erstes U-förmiges Rahmenteil (15) und ein zweites U-förmiges Rahmenteil (16) umfasst,
die Vorderwand (6a) das erste U-förmige Rahmenteil (15) umfasst,
die Rückwand (6d) das zweite U-förmige Rahmenteil (16) umfasst,
das erste und das zweite U-förmige Rahmenteil (15, 16) jeweils mit der Öffnung zum Boden (5) hin ausgerichtet sind,
das erste und das zweite U-förmige Rahmenteil (15, 16) durch die zwei Seitenwände und den Boden (5) miteinander verbunden sind, und
der parallel zum Boden (5) verlaufende Hauptrahmenabschnitt (9) ein Abschnitt des ersten U-förmigen Rahmenteils (15) ist.

7. Einkaufswagen nach Anspruch 6, wobei
ein weiterer parallel zum Boden (5) verlaufender Hauptrahmenabschnitt des zweiten U-förmigen Rahmenteils (16) eine Auflage (17) bildet,
die eine der vier Seitenwände (6a, 6b, 6c, 6d), die von der Fahrfläche (2) und dem Gitterkorb weg um den parallel zum Boden verlaufenden Hauptrahmenabschnitt (9) über die Aufnahmeöffnung (7) schwenkbar ist, die Vorderwand ist, und
der Einkaufswagen (1) so ausgestaltet ist, dass die Vorderwand durch Schwenken über die Aufnahmeöffnung (7) auf die Auflage (17) auflegbar ist.

8. Einkaufswagen (1) nach einem der Ansprüche 6 bis 7, wobei der Einkaufswagen (1) durch ein Verschieben der Vorderwand (6a) relativ zur Rückwand (6d) in eine Verschieberichtung schräg vom Boden (5) weg und zur Rückwand (6d) hin zusammenklappbar ist.

9. Einkaufswagen (1) nach einem der Ansprüche 1 bis 8, wobei der parallel zum Boden (5) verlaufende Hauptrahmenabschnitt (9), insbesondere und der weitere parallel zum Boden (5) verlaufende Hauptrahmenabschnitt, mit Schaumstoff ummantelte Bereiche (18) umfasst.

10. Einkaufswagen (1) nach einem der Ansprüche 1 bis 9, wobei
die Rollen (8) zwei lenkbare Rollen (8a, 8b) und zwei Dreikranzrollen (8c, 8d) umfassen,
am Hauptrahmen (4) eine Rollenlagerachse (19) befestigt ist, und
die zwei Dreikranzrollen (8c, 8d) an den seitlichen Enden der Rollenlagerachse (19) gelagert sind.

## Claims

1. A shopping trolley (1) for being manually rolled over a running surface (2) and for receiving and transporting goods to be transported, comprising
a wire basket (3) comprising a main frame (4), a base (5), four side walls (6a, 6b, 6c, 6d), and a receiving opening (7), the base (5) and the four side walls (6a, 6b, 6c, 6d) being connected to the wire basket (3) by the main frame (4) such that the receiving opening (7) is opposite the base (5) and goods to be transported can be received through the receiving opening (7) in the wire basket (3),
casters (8), which are fastened to the main frame (4) such that the shopping trolley (1) can be manually rolled over the running surface (2) by the base (5) so as to be spaced apart from the running surface (2), and
the shopping trolley (1) can be collapsed by moving a main frame portion (9) extending in parallel with the base (5) in a movement direction obliquely away from the base (5) and toward one of the four side walls (6a, 6b, 6c, 6d), which is opposite the main frame portion (9) extending in parallel with the base (5),
**characterized in that**
one of the four side walls (6a, 6b, 6c, 6d) is pivotally fastened to the main frame portion (9) extending in parallel with the base such that
the one of the four side walls (6a, 6b, 6c, 6d) is pivotable away from the running surface (2) and the wire basket about the main frame portion (9) extending in parallel with the base (5) over the receiving opening (7), and, by pivoting the one of the four side walls (6a, 6b, 6c, 6d) away from the running surface (2) and the wire basket about the main frame portion (9) extending in parallel with the base, a lateral receiving opening (10) in the wire basket (3) is opened, through which goods to be transported can be received by the wire basket (3).

2. The shopping trolley (1) according to Claim 1, wherein
the one of the four side walls (6a, 6b, 6c, 6d) comprises a wire element (11), which extends transversely to the main frame portion (9) extending in parallel with the base and forms a loop (12) as a fastening element at one end, and
the main frame portion (9) extending in parallel with the base (5) extends through the loop (12).

3. The shopping trolley (1) according to Claim 2, wherein
the loop (12) is an oval loop, such that the one of the four side walls (6a, 6b, 6c, 6d) can be moved toward and away from the main frame portion (9) extending in parallel with the base.

4. The shopping trolley (1) according to any one of Claims 2 to 3, wherein
the wire element (11) is a wire rod extending in a substantially straight line, comprising the loop (12) formed at one end as the fastening element,
the one of the four side walls (6a, 6b, 6c, 6d) comprises a U-shaped pivot frame (13) comprising a through-hole, the through-hole extending transversely to the extension direction of the U-shaped pivot frame (13), and
the wire rod extends through the through-hole such that the wire rod extends away from the U-shaped pivot frame (13) in a substantially straight line on one side of the through-hole and the loop (12) extends away from the U-shaped pivot frame (13) on the other side of the through-hole.

5. The shopping trolley (1) according to Claim 4, wherein
the base (5) comprises a gap (14), and
the two end regions of the U-shaped pivot frame (13) have a cross section (15) that is narrowed relative to the rest of the cross section of the U-shaped pivot frame (13), such that the two end regions can be inserted into the gap (14).

6. The shopping trolley (1) according to any one of Claims 1 to 5, wherein
the four side walls (6a, 6b, 6c, 6d) are two side walls (6b, 6c), a front wall (6a), and a rear wall (6d),
the two side walls (6b, 6c) extend in parallel with one another and so as to be spaced apart from one another,
the front wall (6a) and the rear wall (6d) extend in parallel with one another, so as to be spaced apart from one another, and each transversely to the two side walls (6b, 6c),
the side walls (6b, 6c), the front wall (6a), and the rear wall (6d) each extend transversely to the base (5),
the main frame (4) comprises a first U-shaped frame part (15) and a second U-shaped frame part (16),
the front wall (6a) comprises the first U-shaped frame part (15),
the rear wall (6d) comprises the second U-shaped frame part (16),
the first and the second U-shaped frame part (15, 16) are each aligned with the opening toward the base (5),
the first and the second U-shaped frame part (15, 16) are interconnected by the two side walls and the base (5), and
the main frame portion (9) extending in parallel with the base (5) is a portion of the first U-shaped frame part (15).

7. The shopping trolley according to Claim 6, wherein
a further main frame portion of the second U-shaped frame part (16) extending in parallel with the base (5) forms a support (17),
the one of the four side walls (6a, 6b, 6c, 6d) which is pivotable away from the running surface (2) and the wire basket about the main frame portion (9) extending in parallel with the base over the receiving opening (7) is the front wall, and
the shopping trolley (1) is designed such that the front wall can be placed against the support (17) by pivoting over the receiving opening (7).

8. The shopping trolley (1) according to any one of Claims 6 to 7, wherein
the shopping trolley (1) can be collapsed by moving the front wall (6a) relative to the rear wall (6d) in a movement direction obliquely away from the base (5) and toward the rear wall (6d).

9. The shopping trolley (1) according to any one of Claims 1 to 8, wherein
the main frame portion (9) extending in parallel with the base (5), and in particular the further main frame portion extending in parallel with the base (5), comprises regions (18) covered with foam.

10. The shopping trolley (1) according to any one of Claims 1 to 9, wherein
the casters (8) comprise two steerable casters (8a, 8b) and two triangle casters (8c, 8d),
a caster bearing shaft (19) is fastened to the main frame (4), and the two triangle casters (8c, 8d) are mounted on the lateral ends of the caster bearing shaft (19).

## Revendications

1. Chariot de courses (1) destiné à être guidé manuellement pour rouler sur une surface de roulement (2) et recevoir et transporter des marchandises, présentant
un panier en treillis métallique (3) avec un cadre principal (4), un fond (5), quatre parois latérales (6a, 6b, 6c, 6d) et une ouverture de réception (7), le fond (5) et les quatre parois latérales (6a, 6b, 6c, 6d) étant reliées au panier en treillis métallique (3) par le cadre principal (4) de telle sorte que l'ouverture de réception (7) soit opposée au fond (5) et les marchandises puissent être reçues par le panier en treillis métallique (3) à travers l'ouverture de réception (7),
des roues (8) qui sont fixées au cadre principal (4) de telle sorte que le chariot de courses (1) puisse être guidé manuellement pour rouler sur la surface de roulement (2) avec le fond (5) espacé de la surface de roulement (2), et
le chariot de courses (1) pouvant être plié conjointement par le déplacement d'une section de cadre principal (9) s'étendant parallèlement au fond (5) dans une direction de déplacement de manière oblique par rapport au fond (5) et vers une des quatre parois latérales (6a, 6b, 6c, 6d) qui est opposée à la section de cadre principal (9) s'étendant parallèlement au fond (5),
**caractérisé en ce qu'**
une des quatre parois latérales (6a, 6b, 6c, 6d) est fixée de manière pivotante à la section de cadre principal (9) s'étendant parallèlement au fond de telle sorte que
l'une des quatre parois latérales (6a, 6b, 6c, 6d) puisse pivoter au-dessus de l'ouverture de réception (7) à distance de la surface de roulement (2) et du panier en treillis métallique autour de la section de cadre principal (9) s'étendant parallèlement au fond (5) et,
par le pivotement de l'une des quatre parois latérales (6a, 6b, 6c, 6d), à distance de la surface de roulement (2) et du panier en treillis métallique autour de la section de cadre principal (9) s'étendant parallèlement au fond, une ouverture de réception latérale (10), à travers laquelle les marchandises peuvent être reçues par le panier en treillis métallique (3), est libérée sur le panier en treillis métallique (3).

2. Chariot de courses (1) selon la revendication 1, dans lequel
l'une des quatre parois latérales (6a, 6b, 6c, 6d) présente un élément de grille (11) qui s'étend transversalement à la section de cadre principal (9) s'étendant parallèlement au fond et qui forme à une extrémité une boucle (12) servant d'élément de fixation, et
la section de cadre principal (9) s'étendant parallèlement au fond (5) s'étend à travers la boucle (12).

3. Chariot de courses (1) selon la revendication 2, dans lequel
la boucle (12) est une boucle ovale de telle sorte que l'une des quatre parois latérales (6a, 6b, 6c, 6d) puisse être déplacée, à distance sur la section du cadre principal (9) s'étendant parallèlement au fond, vers et depuis celle-ci.

4. Chariot de courses (1) selon l'une quelconque des revendications 2 à 3, dans lequel
l'élément de grille (11) est une barre de grille s'étendant sensiblement de manière droite avec la boucle (12) formée à une extrémité et servant d'élément de fixation,
l'une des quatre parois latérales (6a, 6b, 6c, 6d) présente un cadre de pivotement en forme de U (13) avec un trou traversant, le trou traversant s'étendant transversalement à la direction de parcours du cadre de pivotement en forme de U (13), et
la barre de grille s'étend à travers le trou traversant de telle sorte que la barre de grille, sur l'un des côtés du trou traversant, s'étend sensiblement de manière droite à distance du cadre de pivotement en forme de U (13) et, sur l'autre côté du trou traversant, la boucle (12) s'étend à distance du cadre de pivotement en forme de U (13).

5. Chariot de courses (1) selon la revendication 4, dans lequel
le fond (5) présente une fente (14), et
les deux zones d'extrémité du cadre de pivotement en forme de U (13) présentent une section transversale (15) rétrécie par rapport à la section transversale restante du cadre de pivotement en forme de U (13) de telle sorte que les deux zones d'extrémité puissent être placées dans la fente (14).

6. Chariot de courses (1) selon l'une quelconque des revendications 1 à 5, dans lequel
les quatre parois latérales (6a, 6b, 6c, 6d) sont deux parois latérales (6b, 6c), une paroi avant (6a) et une paroi arrière (6d),
les deux parois latérales (6b, 6c) s'étendent parallèlement l'une à l'autre et sont espacées l'une de l'autre,
la paroi avant (6a) et la paroi arrière (6d) s'étendent parallèlement, de manière espacée l'une de l'autre et chacune transversalement aux deux parois latérales (6b, 6c),
les parois latérales (6b, 6c), la paroi avant (6a) et la paroi arrière (6d) s'étendent chacune transversalement au fond (5),
le cadre principal (4) comprend une première partie de cadre en forme de U (15) et une seconde partie de cadre en forme de U (16),
la paroi avant (6a) comprend la première partie de cadre en forme de U (15),
la paroi arrière (6d) comprend la seconde partie de cadre en forme de U (16),
les première et seconde parties de cadre en forme de U (15, 16) sont chacune alignées avec l'ouverture vers le fond (5),
les première et seconde parties de cadre en forme de U (15, 16) sont reliées l'une à l'autre par les deux parois latérales et le fond (5), et
la section de cadre principal (9) qui s'étend parallèlement au fond (5) est une section de la première partie de cadre en forme de U (15).

7. Chariot de courses selon la revendication 6, dans lequel
une autre section de cadre principal de la seconde partie de cadre en forme de U (16) et s'étendant parallèlement au fond (5) forme un support (17),
l'une des quatre parois latérales (6a, 6b, 6c, 6d), qui peut pivoter au-dessus de l'ouverture de réception (7) à distance de la surface de roulement (2) et du panier en treillis métallique autour de la section de cadre principal (9) s'étendant parallèlement au fond, est la paroi avant, et
le chariot de courses (1) est conçu de telle sorte que la paroi avant puisse être placée sur le support (17) par pivotement au-dessus de l'ouverture de réception (7).

8. Chariot de courses (1) selon l'une quelconque des revendications 6 à 7, dans lequel
le chariot de courses (1) peut être plié par un déplacement de la paroi avant (6a) par rapport à la paroi arrière (6d) dans une direction de déplacement de manière oblique par rapport au fond (5) et vers la paroi arrière (6d).

9. Chariot de courses (1) selon l'une quelconque des revendications 1 à 8, dans lequel
la section de cadre principal (9) s'étendant parallèlement vers le fond (5), et en particulier l'autre section de cadre principal s'étendant parallèlement au fond (5), comprend des régions enveloppées de mousse (18).

10. Chariot de courses (1) selon l'une quelconque des revendications 1 à 9, dans lequel
les roues (8) comprennent deux roues dirigeables (8a, 8b) ainsi que deux couronnes à trois roues (8c, 8d),
au niveau du cadre principal (4) est fixé un arbre de palier de roulement (19), et
les deux couronnes à trois roues (8c, 8d) sont placées sur les extrémités latérales de l'arbre de palier de roulement (19).
